# EUROPÄISCHE PATENTSCHRIFT

(11) **EP 0 560 047 B1**
(45) Veröffentlichungstag und Bekanntmachung des Hinweises auf die Patenterteilung: **22.05.1996**
(21) Anmeldenummer: 93101697.6
(22) Anmeldetag: 04.02.1993
(51) Int. Cl.: E05F 15/00, F16P 3/12, F16P 3/14

(54) **Sicherheitseinrichtung für motorisch verschliessbare Öffnungen**
Safety device for power-closable openings
Dispositif de sécurité pour ouvertures fermables électriquement

(30) Priorität: 12.03.1992 DE 4207885
(43) Veröffentlichungstag der Anmeldung: 15.09.1993
(73) Patentinhaber: ROBERT BOSCH GMBH, 70442 Stuttgart (DE)
(72) Erfinder: Mangler, Jürgen, W-7554 Oberndorf (DE)

(56) Entgegenhaltungen:
- DE-A- 2 246 337
- DE-A- 3 712 950
- FR-A- 2 612 027

## Beschreibung

### Stand der Technik

Die Erfindung geht aus von einer Sicherheitseinrichtung für motorisch verschließbare Öffnungen nach der Gattung des Hauptanspruchs. Aus der DE-OS 22 46 337 ist eine Sicherheitseinrichtung für motorisch verschließbare Öffnungen bekannt, bei der ein in beiden Drehrichtungen betreibbarer Motor aus- oder umgeschaltet wird, sobald das mit dem Motor bewegte Element auf ein Hinderniss trifft. Als Einklemmsensor ist eine akustische Strecke vorgesehen, die mit einem elastischen Schlauch realisiert ist, der entlang der freien Kante des bewegten Elementes an der Öffnung angeordnet ist. Ausgewertet wird eine Bestimmungsgröße des von einem Schallgeber abgestrahlten Signals. Als Bestimmungsgröße wird beispielsweise die Amplitude des empfangenen Signals ausgewertet. In einem anderen Ausführungsbeispiel wird die Schallfrequenz durch akustische Rückkopplung festgelegt. Ausgewertet wird dann die Frequenzänderung während eines Einklemmvorgangs.

Der Erfindung liegt die Aufgabe zugrunde, eine Sicherheitsvorrichtung mit einem einfachen akustischen Einklemmsensor für verschließbare Öffnungen anzugeben, die eine hohe Detektionssicherheit aufweist.

Die Aufgabe wird durch die im Hauptanspruch angegebenen Merkmale gelöst.

### Vorteile der Erfindung

Die erfindungsgemäße Vorrichtung sieht Mittel zum Erfassen der Laufzeit des Schalls vor. Die erfaßte Laufzeit wird mit einer Schwelle verglichen, wobei nach einer Schwellenüberschreitung ein Schaltsignal an den Antrieb abgegeben wird, das dessen Bewegung stillsetzt oder dessen Bewegungsrichtung umkehrt. Die Erfassung der Laufzeit des Schalls ist mit einfachen Mitteln möglich und gewährleistet eine hohe Detektionssicherheit.

Vorteilhafte Weiterbildungen und Verbesserungen der erfindungsgemäßen Vorrichtung ergeben sich aus Unteransprüchen.

Besonders vorteilhaft ist die Maßnahme, die Änderung der Laufzeit innerhalb einer vorgegebenen Zeit zu erfassen und die Änderung mit einer Schwelle zu vergleichen. Der besondere Vorteil dieser Maßnahme liegt darin, daß eine längerfristige Änderung der Laufzeit des Schalls, beispielsweise durch eine Änderung der Umgebungstemperatur, keine Auswirkungen auf das Ergebnis hat.

Die Laufzeit des Schalls wird vorteilhafterweise aus einem Vergleich der Phase des empfangenen Signals mit einer Referenzphase ermittelt. Die Referenzphase ist beispielsweise von einem dem Schallempfänger zugeordneten Generator abgeleitet. Vorzugsweise wird die Referenzphase jedoch unmittelbar von dem Generator abgeleitet, dessen Ausgangssignal dem Schallgeber zugeführt ist.

Eine besonders vorteilhafte Weiterbildung der erfindungsgemäßen Sicherheitsvorrichtung sieht eine Nachführung der Schwelle, mit der die Laufzeit oder die Laufzeitänderung verglichen wird, in Abhängigkeit von einem Mittelwert zuvor ermittelter Werte oder in Abhängigkeit vom Spitzenwert wenigstens eines zuvor ermittelten Wertes vor. Die adaptive Nachführung der Schwelle erhöht nochmals die Detektionssicherheit durch die Eliminierung von Langzeitveränderungen, wie beispielsweise Alterungserscheinungen.

Eine andere vorteilhafte Möglichkeit, die Laufzeit des Schalls zu ermitteln, ist bei impulsförmigen Signalen gegeben, wobei die Laufzeit aus dem Abstand wenigstens zweier empfangener Impulspakete ermittelt wird.

Eine vorteilhafte Alternative hierzu sieht vor, daß die Laufzeit ermittelt wird aus dem Abstand zwischen wenigstens einem Sende- und einem korrespondierenden Empfangsimpulspaket.

Die adaptive Nachführung der Schwelle, mit der die Laufzeit verglichen wird, ist auch in dieser vorteilhaften Ausgestaltung der erfindungsgemäßen Sicherheitsvorrichtung in Abhängigkeit von einem Mittelwert oder in Abhängigkeit von einem Spitzenwert zuvor erfaßter Abstände möglich.

Weitere vorteilhafte Weiterbildungen und Verbesserungen der erfindungsgemäßen Vorrichtung ergeben sich aus weiteren Unteransprüchen in Verbindung mit der folgenden Beschreibung.

### Zeichnung

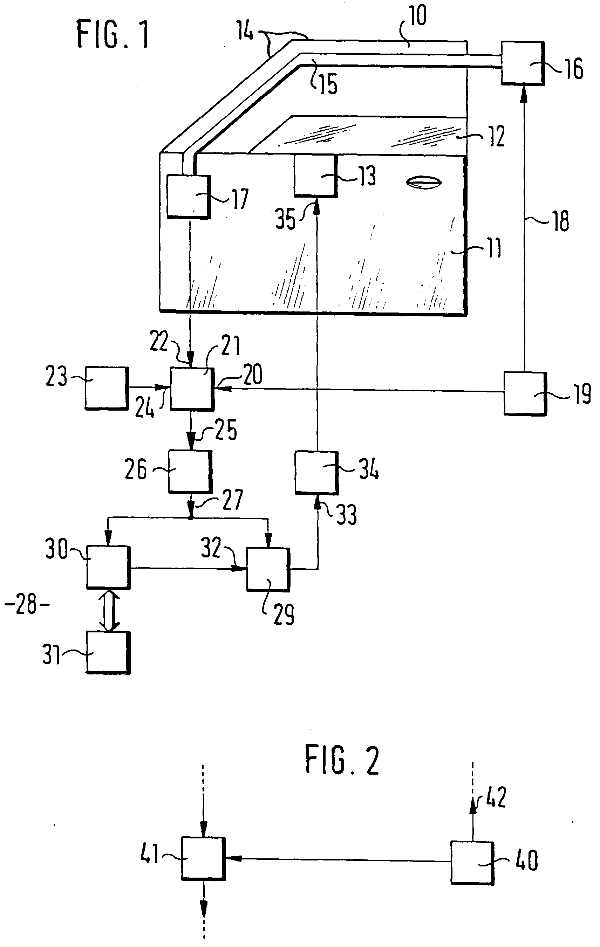

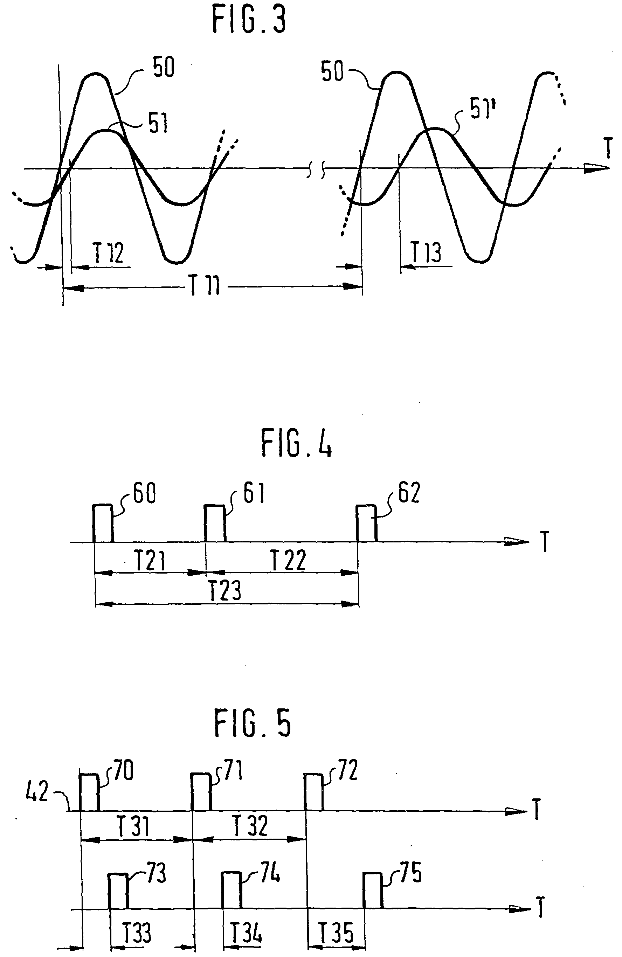

Figur 1 zeigt ein Blockschaltbild einer erfindungsgemäßen Sicherheitsvorrichtung für verschließbare Öffnungen, Figur 2 zeigt eine alternative Ausgestaltung des Blockschaltbildes und die Figuren 3 bis 5 zeigen Signalverläufe in Abhängigkeit von der Zeit.

Figur 1 zeigt als Beispiel einer verschließbaren Öffnung ein Fenster 10 einer Kraftfahrzeugtüre 11, das von einer Scheibe 12 verschließbar ist. Die Scheibe 12 wird von einem elektromotorischen Antrieb 13 verschoben. Entlang einer Schließkante 14 der Öffnung 10 ist eine akustische Strecke 15 angeordnet, die von einem Schallgeber 16 und von einem Schallempfänger 17 begrenzt ist.

Der Schallgeber 16 erhält ein Signal 18 zugeführt, das von einem Generator 19 erzeugt wird. Der Generator 19 gibt weiterhin ein Signal 20 an einen Vergleicher 21 ab, dem das vom Schallempfänger 17 abgegebene Signal 22 und das von einem Referenzsignalgeber 23 abgegebene Referenzsignal 24 zugeleitet sind. Der Vergleicher 21 gibt ein Ausgangssignal 25 an einen Differenzierer 26 ab. Das Ausgangssignal 27 des Differenzierers 26 ist sowohl einer Schwellwertnachführungsanordnung 28 als auch einem Komparator 29 zugeleitet. Die Schwellwert-Nachführungsanordnung 28 enthält eine signalverarbeitende Anordnung 30 und einen Speicher 31. Sie gibt einen Schwellwert 32 an den Komparator 29 ab. Der Komparator 29 gibt ein Schaltsignal 33 an eine Motorsteuerschaltung 34 ab, die über das Ausgangssignal 35 den elektromotorischen Antrieb 13 ein- und ausschaltet.

In Figur 2 ist eine Alternative zu dem in Figur 1 gezeigten Blockschaltbild angegeben. Der in Figur 1 angegebene Generator 19 sowie der Vergleicher 21 werden ersetzt durch einen Impulsgenerator 40 und durch einen Impulsvergleicher 41. Die anderen, in Figur 2 nicht gezeigten Teile stimmen mit den in Figur 1 gezeigten Teilen überein. Der Impulsgenerator gibt ein impulsförmiges Signal 42 ab.

Figur 3 zeigt Signalverläufe in Abhängigkeit von der Zeit T, die vom Schallgeber 16 erzeugt und vom Schallempfänger 17 empfangen werden. Das vom Schallgeber 16 abgegebene Signal trägt das Bezugszeichen 50. Eingetragen in Figur 3 sind zwei vollständige Perioden des Signals 50, die ein Zeitintervall T11 zeitlich nacheinander liegen. Mit dem Bezugszeichen 51 ist das vom Schallempfänger 17 empfangene Signal bezeichnet, das gegenüber dem Sendesignal 50 eine Phasenverschiebung, entsprechend einer Zeit T12 aufweist. Nach Ablauf des Intervalls T11 ist ein weiteres Empfangssignal 51' gezeigt, das zu diesem späteren Zeitpunkt eine Phasenverschiebung entsprechend einer Zeit T13 gegenüber dem Sendesignal 50 aufweist. Die Zeit T13 ist größer als die Zeit T12.

Figur 4 zeigt impulsförmige Empfangssignale 60, 61, 62, die vom Impulsgenerator 40 abgegeben werden. Zwischen dem ersten und zweiten Signal 60, 61 liegt ein Abstand entsprechend einer Zeit T21, zwischen dem zweiten und dritten Signal 61, 62 liegt ein Abstand entsprechend einer Zeit T22 und zwischen dem ersten und dem dritten Signal 60, 62 liegt ein Abstand entsprechend einer Zeit T23.

Figur 5 zeigt zwei Signalverläufe in Abhängigkeit von der Zeit. Im oberen Teilbild ist das vom Impulsgenerator 40 abgegebene Impulssignal 42 mit den Sendeimpulsen 70, 71, 72 gezeigt. Der Abstand zwischen dem ersten und zweiten Impuls 70, 71 entspricht einer Zeit T31 und der Abstand zwischen dem zweiten und dritten Sendeimpuls 71, 72 entspricht einer Zeit T32. Im unteren Teilbild sind die zu den Impulsen 70, 71, 72 korrespondierenden Empfangsimpulse 73, 74, 75 gezeigt. Der Abstand zwischen dem Sendeimpuls 70 und dem korrespondierenden Empfangsimpuls 73 entspricht einer Zeit T33, der Abstand zwischen dem Sendeimpuls 71 und dem korrespondierenden Empfangsimpuls 74 entspricht einer Zeit T34 und der Abstand zwischen dem Sendeimpuls 72 und dem korrespondierenden Empfangsimpuls 75 entspricht einer Zeit T35.

Die erfindungsgemäße Vorrichtung wird zunächst anhand des in Figur 1 gezeigten Blockschaltbilds in Verbindung mit den in Figur 3 gezeigten Signalverläufen näher erläutert:

Die erfindungsgemäße Sicherheitsvorrichtung für verschließbare Öffnungen 10 ist bei dem in Figur 1 gezeigten Ausführungsbeispiel beispielsweise der Kraftfahrzeugtüre 11 zugeordnet. Bei elektromotorisch betätigbaren Fenstern 12 besteht die Gefahr des Einklemmens von Gegenständen oder von Körperteilen, die mit der erfindungsgemäßen Sicherheitsvorrichtung verhindert werden soll. Als Einklemmsensor ist die akustische Strecke 15 vorgesehen, die entlang der Schließkante 14 an der Kraftfahrzeugtüre 11 angeordnet ist. Die Strecke 15 könnte ebenso an der oberen Kante des Fensters 12 angeordnet sein. Die akustische Strecke 15 ist beispielsweise als Schlauch realisiert, an dessen einem Ende der Schallgeber 16 und dessen anderem Ende der Schallempfänger 17 angeordnet ist. Der Geber 16 strahlt Schallwellen ab, die nach Durchlaufen der akustischen Strecke 15 den Schallempfänger 17 erreichen. Experimentell wurde ermittelt, daß ein Einklemmvorgang einen Einfluß auf die Laufzeit des Schalls hat. Eine tangential an der beispielsweise als Schlauch realisierten akustischen Strecke 15 angreifende Kraft bewirkt eine differentielle Verlängerung des Schallwegs, welche die Laufzeit des Schalls erhöht. Erfindungsgemäß ist deshalb die Erfassung der Laufzeit des Schalls vorgesehen.

Das vom Schallempfänger 17 abgegebene Empfangssignal 22 gelangt in den Vergleicher 21, der die Signallaufzeit oder zumindest ein relatives Maß der Laufzeit ermittelt und als Ausgangssignal 25 abgibt.

In einer ersten Ausgestaltung ermittelt der Vergleicher 21 die Laufzeit aus Phasenbeziehungen zweier Signale. Das erste Signal ist das Empfangssignal 22, dessen Phase mit der Phase des Referenzsignals 24 verglichen wird, das vom Referenzsignalgeber 23 abgegeben wird. Die Frequenz des vom Referenzsignalgeber 23 erzeugten Signals 24 muß in Bezug auf die Phase des Empfangssignals 22 wenigstens während eines Meßvorgangs Kurzzeitstabilität aufweisen. Weitere Bedingungen sind nicht zu erfüllen. Vorteilhaft ist es jedoch, wenn die Frequenz des Referenzsignals 24 gleich der Frequenz des vom Schallgeber 16 abgegebenen Signals oder Vielfachen davon ist. In dieser Ausgestaltung ist der Vergleicher als Phasendetektor zu realisieren, dessen Ausgangssignal 25 ein Maß für die Phasenverschiebung zwischen dem Referenzsignal 24 und dem Empfangssignal 22 ist.

In Figur 3 ist das vom Schallgeber 16 abgegebene Signal 50 gezeigt, das im Ausführungsbeispiel einen sinusförmigen Verlauf aufweist. Das Empfangssignal 22 ist in Figur 3 zu unterschiedlichen Zeitpunkten mit den Bezugszeichen 51, 51' eingetragen. Zu einer ersten Zeit weist das Signal 51 gegenüber dem Signal 50 eine Phasenverschiebung entsprechend der Zeit T12 auf. Nach dem Intervall T11 liegt zwischen dem Signal 50 und dem Empfangssignal 51 eine größere Phasenverschiebung entsprechend der Zeit T13 vor. Der Vergleicher 21 gibt das Signal 25 in Abhängigkeit von der Phasenverschiebung entsprechend der Zeiten T12, T13 aus.

In einer einfachen Ausgestaltung gelangt das Ausgangssignal 25 unmittelbar zum Komparator 29, der das der Zeiten T12, T13 entsprechende Signal mit einer vorgegebenen Schwelle vergleicht. Bei einem Überschreiten der Schwelle, die einer bestimmten Phasenverschiebung und somit einer bestimmten Laufzeit zuzuordnen ist, gibt der Komparator das Schaltsignal 33 an die Motorsteuerschaltung 34 ab, die über das Ausgangssignal 35 den elektromotorischen Antrieb 13 entweder stillsetzt oder seine Bewegungsrichtung zumindest kurzzeitig umkehrt.

In einer anderen Ausgestaltung ist vorgesehen, daß der Vergleicher 21 anstelle des vom Referenzsignalgeber 23 abgegebenen Referenzsignals 24 unmittelbar das vom Generator 19 abgegebene Signal 20 zugeführt erhält. Das Signal 20 kann mit dem Signal 18 übereinstimmen, das dem Schallgeber zugeleitet ist. In dieser Ausgestaltung ist in allen Betriebssituationen sichergestellt, daß das dem Vergleicher 21 zugeführte Referenzsignal 20 eine feste Phasenbeziehung zu dem Signal 18, 50 aufweist. Weiterhin kann der Aufwand für den Referenzsignalgeber 23 eingespart werden.

In einer vorteilhaften Weiterbildung ist die Weiterverarbeitung des vom Vergleicher 21 abgegebenen Signals 25 im Differenzierer 26 vorgesehen. Das Ausgangssignal 27 des Differenzierers 26 ist ein Maß für die Änderung der Laufzeit des Schallsignals in der akustischen Strecke 15. Anstelle des Absolutwertes der Laufzeit gemäß der ersten Ausgestaltung werden in dieser Ausgestaltung somit Änderungen ausgewertet, die beispielsweise innerhalb der in Figur 3 angegebenen Zeit T11 aufgetreten sind. Die Auswertung lediglich der Änderungen der Laufzeit eliminiert den Einfluß von Änderungen der Laufzeit des Schalls, die durch sich ändernde Umgebungsbedingungen verursacht sind. Das Zeitintervall, in welchem das Signal 25 differenziert wird, kann beispielsweise das in Figur 3 gezeigte Zeitintervall T11 sein. Es ist sowohl eine diskrete als auch eine gleitende Differenzierung möglich. Die gleitenden Differenzierung wird vorzugsweise mit einer Hochpaßschaltung realisiert, deren Übertragungsfunktion geeignet zu wählen ist.

In einer weiteren Ausgestaltung ist vorgesehen, die dem Komparator 29 zugeführte Schwelle nachzuführen. Die Nachführung wird von der signalverarbeitenden Anordnung 30 vorgenommen, der ebenfalls das Ausgangssignal 25 des Vergleichers 21 oder das Ausgangssignal 27 des Differenzierers 26 zugeleitet wird. Die signalverarbeitende Anordnung 30 ist beispielsweise als Mikrorechnerschaltung realisiert, die auf den Speicher 31 zurückgreifen kann. Die Nachführung der Schwelle ist beispielsweise in Abhängigkeit von einem Mittelwert der vorangegangenen Werte des Signals 25 oder des Signals 27 nachgeführt. Anstelle der Schwellennachführung in Abhängigkeit von einem Mittelwert kann auch eine Nachführung in Abhängigkeit vom Spitzenwert vorangegangener Signale 25, 27 vorgesehen sein. Der Spitzenwert wird vorzugsweise mit einem vorgegebenen Faktor - beispielsweise 0,9 - multipliziert und als Schwellwert 32 ausgegeben. Die Schwellennachführung weist den wesentlichen Vorteil auf, daß Driftvorgänge und Alterungserscheinungen keinen negativen Einfluß auf die Detektionssicherheit haben.

In einem anderen Ausführungsbeispiel ist anstelle des Generators 19, der das in Figur 3 gezeigte kontinuierliche Signal 50, vorzugsweise ein sinusförmiges Signal, abgibt, der Generator 40 vorgesehen ist, der ein in Figur 4 gezeigtes impulsförmiges Signal 60, 61, 62 abgibt.

Das impulsförmige Signal 60, 61, 62 wird vorteilhafterweise aus einem kontinuierlichen Signal gemäß Figur 3 dadurch erzeugt, daß das kontinuierliche Signal kurzzeitig eingeschaltet wird. Die in Figur 4 und in der später erläuterten Figur 5 gezeigten Impulse sind somit die Einhüllenden der zeitbegrenzten höherfrequenten kontinuierlichen Signale. Die Impulsdauer ist derart festzulegen, daß mehrere Periodendauern des kontinuierlichen Signals unterzubringen sind. Bei dieser Auslegung ist das Einschwing- und Ausschwingverhalten des Schallgebers 16 zu berücksichtigen. Erfindungsgemäß wird die Laufzeit der Impulse 60, 61, 62 ausgewertet. Die in Figur 4 gezeigten Impulse 60, 61, 62 entsprechen dem vom Schallempfänger 17 abgegebenen Empfangssignal 22. Der Vergleicher 21 gemäß Figur 1 ist durch den in Figur 2 gezeigten Impulsvergleicher 41 zu ersetzen. Der Impulsvergleicher 41 ermittelt den zeitlichen Abstand T21 zeitlich nacheinander empfangener Impulse 60, 61; 61, 62. Der zeitliche Abstand T21, T22 der Impulse 60, 61, 62 ist ein Maß für die Laufzeit, die als Ausgangssignal 25 dem Komparator 29 zugeleitet wird, der das Signal mit der Schwelle 32 vergleicht. Auch in diesem Ausführungsbeispiel wird vorteilhaft der Differenzierer 26 eingesetzt, mit dem die Auswertung der Änderung der Laufzeit zwischen den Impulsen 60, 61, 62 ermittelbar ist. Die Änderung der Laufzeit ist beispielsweise durch Differenzbildung der Abstände T21, T21 aufeinanderfolgender Impulse 60, 61; 61, 62 möglich. Eine analoge Lösung bildet unmittelbar die Ableitung des Signals 25 nach der Zeit.

Auch bei diesem Ausführungsbeispiel kann die Schwellennachführung vorteilhaft eingesetzt werden.

Eine andere Weiterbildung dieses Ausführungsbeispiels sieht die Ermittlung der Signallaufzeit unmittelbar aus den Sendeimpulsen und den dazu korrespondierenden empfangenen Impulsen vor. In Figur 5 sind in der oberen Bildhälfte die Sendeimpulse 70, 71, 72 gezeigt. Die Impulse werden in einem zeitlichen Abstand der Dauer T31, T32 gesendet, der vorzugsweise konstant gehalten wird. Die zu den Sendeimpulsen korrespondierenden Empfangsimpulse 73, 74, 75 sind im unteren Teilbild der Figur 5 gezeigt. Die Empfangsimpulse 73, 74, 75 weisen jeweils einen zeitlichen Versatz T33, T34, T35 gegenüber den Sendeimpulsen 70, 71, 72 auf. Die Sendeimpulse 70, 71, 72 sowie die Empfangsimpulse 73, 74, 75 sind - wie bereits zu Figur 4 erläutert - vorzugsweise die Einhüllenden von höherfrequenten, zeitlich begrenzten kontinuierlichen Signalen. Der Impulsvergleicher 41 erhält nun sowohl die Empfangsimpulse 73, 74, 75 als auch die Sendeimpulse 70, 71, 72 zugeführt und ermittelt aus den Zeiten T33, T34, T35 unmittelbar die Laufzeit des Schalls. Mit dieser Maßnahme wird die Detektionssicherheit dadurch weiter erhöht, daß die Schwelle für den Komparator 29 präziser einstellbar ist. Sowohl die Ermittlung und Auswertung einer Laufzeitänderung als auch eine der beschriebenen Möglichkeiten zur Schwellennachführung können auch bei dieser Weiterbildung vorteilhaft eingesetzt werden.

Es wurde bereits darauf hingewiesen, daß die signalverarbeitende Anordnung 30 vorzugsweise als Mikrorechnerschaltung realisierbar ist. Ebenso ist es möglich, die weiteren Komponenten beispielsweise den Referenzsignalgeber 23, den Vergleicher 21, den Impulsvergleicher 41, den Differenzierer 26, den Komparator 29, den Generator 19, den Generator 40 sowie zumindest Teile der Motorsteuerschaltung 34 im Mikrorechersystem in Form von Software zu realisieren.

## Patentansprüche

1. Sicherheitsvorrichtung für verschließbare Öffnungen, bei denen eine Einklemmgefahr besteht, mit einem akustischen Einklemmsensor, der einen Schallgeber (16), eine akustische Strecke (15) und einen Schallempfänger (17) enthält, und mit einem elektromotorischen Antrieb (13) zum Bewegen eines Schließteils (10), dessen Bewegung stillgesetzt oder dessen Bewegungsrichtung umgekehrt wird, sobald der Sensor einen Einklemmvorgang detektiert, dadurch gekennzeichnet, daß Mittel (21, 23, 41) zum Erfassen der Laufzeit (T12, T13, T21, T22, T33, T34, T35) des Schalls vorgesehen sind, und daß Mittel (29) zum Vergleich der erfaßten Laufzeit (T12, T13, T21, T22, T33, T34, T35) mit einer Schwelle (32) vorgesehen sind, die bei einer Schwellenüberschreitung ein Schaltsignal (33, 35) an den Antrieb abgeben.

2. Vorrichtung nach Anspruch 1, dadurch gekennzeichnet, daß Mittel (26) zum Feststellen einer Änderung der Laufzeit (T12, T13, T21, T22, T33, T34, T35) vorgesehen sind und daß die erfaßte Änderung (27) den Vergleichsmitteln (29) zugeführt ist.

3. Vorrichtung nach Anspruch 1 oder 2, dadurch gekennzeichnet, daß die Laufzeit (T12, T13, T21, T22, T33, T34, T35) ermittelt wird aus einem Vergleich der Phase des vom Schallempfänger (17) abgegebenen Empfangssignals (22) mit einer Referenzphase.

4. Vorrichtung nach Anspruch 3, dadurch gekennzeichnet, daß die Referenzphase abgeleitet ist von einem Referenzsignal (24), das ein Referenzsignalgeber (23) abgibt.

5. Vorrichtung nach Anspruch 3, dadurch gekennzeichnet, daß die Referenzphase abgeleitet ist von einem Signal (18, 20), das ein Generator (19) abgibt, der den Schallgeber (16) ansteuert.

6. Vorrichtung nach Anspruch 1 oder 2, dadurch gekennzeichnet, daß der Schallgeber (16) von einem Impulsgenerator (40) angesteuert ist und daß die Laufzeit ermittelt wird aus wenigstens einem Abstand (T21, T22) aufeinanderfolgender empfangener Impulse (60 61; 61, 62).

7. Vorrichtung nach Anspruch 1 oder 2, dadurch gekennzeichnet, daß der Schallgeber (16) von einem Impulsgenerator (40) angesteuert wird und daß die Laufzeit ermittelt wird aus dem Abstand (T33, T34, T35) zwischen dem Sendeimpuls (70, 71, 72) und dem korrespondierenden empfangenen Impuls (73, 74, 75).

8. Vorrichtung nach einem der vorhergehenden Ansprüche, dadurch gekennzeichnet, daß die Schwelle (32) nachgeführt ist in Abhängigkeit von einem Mittelwert zuvor ermittelter Werte (T12, T13, T21, T22, T33, T34, T35).

9. Vorrichtung nach einem der Ansprüche 1 bis 5, dadurch gekennzeichnet, daß die Schwelle (32) nachgeführt ist in Abhängigkeit von dem Spitzenwert zuvor ermittelter Werte (T12, T13, T21, T22, T33, T34, T35).

## Claims

1. Safety device for closable openings in which there is a risk of trapping occurring, having an acoustic trapping sensor which contains a sound transmitter (16), an acoustic path (15) and a sound receiver (17), and having an electromotive drive (13) for moving a closing component (10) whose movement is deactivated or whose direction of movement is reversed as soon as the sensor detects a trapping process, characterized in that means (21, 23, 41) are provided for detecting the propagation time (T12, T13, T21, T22, T33, T34, T35) of the sound, and in that means (29) are provided for comparing the detected propagation time (T12, T13, T21, T22, T33, T34, T35) with a threshold (32), which means (29) output a switching signal (33, 35) to the drive when a threshold is exceeded.

2. Device according to Claim 1, characterized in that means (26) are provided for detecting a change in the propagation time (T12, T13, T21, T22, T33, T34, T35), and in that the detected change (27) is fed to the comparison means (29).

3. Device according to Claim 1 or 2, characterized in that the propagation time (T12, T13, T21, T22, T33, T34, T35) is determined from a comparison of the phase of the reception signal (22) output by the sound receiver (17), with a reference phase.

4. Device according to Claim 3, characterized in that the reference phase is derived from a reference signal (24) which a reference signal transmitter (23) outputs.

5. Device according to Claim 3, characterized in that the reference phase is derived from a signal (18, 20) which is output by a generator (19) which actuates the sound transmitter (16).

6. Device according to Claim 1 or 2, characterized in that the sound transmitter (16) is actuated by a pulse generator (40), and in that the propagation time is determined from at least one interval (T21, T22) between successive received pulses (60, 61; 61, 62).

7. Device according to Claim 1 or 2, characterized in that the sound transmitter (16) is actuated by a pulse generator (40) and in that the propagation time is determined from the interval (T33, T34, T35) between the transmission pulse (70, 71, 72) and the corresponding received pulse (73, 74, 75).

8. Device according to one of the preceding claims, characterized in that the threshold (32) is adjusted as a function of an average value of previously determined values (T12, T13, T21, T22, T33, T34, T35).

9. Device according to one of Claims 1 to 5, characterized in that the threshold (32) is adjusted as a function of the peak value of previously determined values (T12, T13, T21, T22, T33, T34, T35).

## Revendications

1. Dispositif de sécurité pour des ouvertures susceptibles d'être fermées et présentant un risque de pincement, comportant un capteur acoustique de pincement comprenant un générateur acoustique (16), un chemin acoustique (15) ainsi qu'un récepteur acoustique (17) et un moyen d'entraînement à moteur électrique (13) pour déplacer une pièce de fermeture (10) dont le mouvement est arrêté ou le sens de mouvement est inversé dès que le capteur détecte une opération de pincement, caractérisé par des moyens (21, 23, 41) pour détecter le temps de parcours (T12, T13, T21, T22, T33, T34, T35) du son et des moyens (29) pour comparer le temps de parcours détecté (T12, T13, T21, T22, T33, T34, T35) à un seuil (32), qui émettent un signal acoustique (33, 35) pour le moyen d'entraînement en cas de dépassement d'un seuil.

2. Dispositif selon la revendication 1, caractérisé par des moyens (26) pour déterminer une variation du temps de parcours (T12, T13, T21, T33, T34 et T35), et la variation détectée (27) est asservie sur les moyens de comparaison (29).

3. Dispositif selon la revendication 1 ou 2, caractérisé en ce qu'on détermine le temps de parcours (T12, T13, T21, T22, T33, T34, T35) à partir de la comparaison de la phase du signal de réception (22) émis par le récepteur acoustique (17) et d'une phase de référence.

4. Dispositif selon la revendication 3, caractérisé en ce qu'on déduit la phase de référence d'un signal de référence (24) émis par un générateur de signal de référence (23).

5. Dispositif selon la revendication 3, caractérisé en ce qu'on déduit la phase de référence d'un signal (18, 20) émis par un générateur (19) commandant le générateur acoustique (16).

6. Dispositif selon la revendication 1 ou 2, caractérisé en ce que le générateur acoustique (16) est commandé par un générateur d'impulsions (40) et le temps de parcours se détermine à partir d'au moins un intervalle (T21, T22) d'impulsions reçues, successives (60, 61; 61, 62).

7. Dispositif selon la revendication 1 ou 2, caractérisé en ce qu'on commande le générateur acoustique (16) par un générateur impulsionnel (40) et on détermine le temps de parcours à partir de l'intervalle (T33, T34, T35) entre l'impulsion d'émission (70, 71, 72) et l'impulsion de réception correspondante (73, 74, 75).

8. Dispositif selon l'une quelconque des revendications précédentes, caractérisé en ce que l'on asservit le seuil (32) en fonction d'une valeur moyenne de valeur prédéterminée préalablement (T12, T13, T21, T22, T33, T34, T35).

9. Dispositif selon l'une quelconque des revendications 1 à 5, caractérisé en ce qu'on asservit le seuil (32) en fonction de la valeur maximale de valeurs prédéterminées préalablement (T12, T13, T21, T22, T33, T34, T35.).
